(19) Europäisches Patentamt
European Patent Office
Office européen des brevets

(11) **EP 2 678 917 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **12708787.2**

(22) Anmeldetag: **14.02.2012**

(51) Int Cl.:
*H02J 3/14* (2006.01)      *G06Q 10/06* (2012.01)

(86) Internationale Anmeldenummer:
**PCT/EP2012/052494**

(87) Internationale Veröffentlichungsnummer:
**WO 2012/113680 (30.08.2012 Gazette 2012/35)**

(54) **VERFAHREN ZUM BESTIMMEN EINES STARTZEITPUNKTS FÜR DEN START EINES BETRIEBSPROZESSES EINES HAUSHALTSGERÄTS UND HAUSHALTSGERÄT**

METHOD FOR DETERMINING A START TIME FOR STARTING AN OPERATING PROCESS OF A HOUSEHOLD APPLIANCE AND HOUSEHOLD APPLIANCE

PROCÉDÉ DE DÉTERMINATION D'UN INSTANT DE DÉMARRAGE D'UN PROCESSUS DE FONCTIONNEMENT D'UN APPAREIL MÉNAGER, ET APPAREIL MÉNAGER CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2011 DE 102011004713**

(43) Veröffentlichungstag der Anmeldung:
**01.01.2014 Patentblatt 2014/01**

(73) Patentinhaber: **BSH Hausgeräte GmbH**
**81739 München (DE)**

(72) Erfinder:
• **CLAUSS, Jens**
**93051 Regensburg (DE)**
• **GAUGLER, Johannes**
**93073 Neutraubling (DE)**
• **LEHMANN, Jens**
**93138 Lappersdorf (DE)**

(56) Entgegenhaltungen:
**US-A1- 2003 178 894      US-A1- 2006 276 938**

• **JIN XIAO ET AL: "Near optimal demand-side energy management under real-time demand-response pricing", NETWORK AND SERVICE MANAGEMENT (CNSM), 2010 INTERNATIONAL CONFERENCE ON, IEEE, PISCATAWAY, NJ, USA, 25 October 2010 (2010-10-25), pages 527-532, XP031852199, ISBN: 978-1-4244-8910-7**

**Beschreibung**

Die Erfindung betrifft ein Verfahren zum Bestimmen eines Startzeitpunkts für den Start eines Betriebsprozesses eines Haushaltsgeräts mittels einer Steuereinrichtung. Zu zumindest einer Betriebsressource des Haushaltsgeräts empfängt die Steuereinrichtung Daten mit Informationen über einen zeitlichen Preisverlauf der Betriebsressource für ein nachkommendes Zeitintervall. Die Steuereinrichtung bestimmt den Startzeitpunkt in Abhängigkeit von dem zeitlichen Preisverlauf der Betriebsressource. Die Erfindung betrifft außerdem ein Haushaltsgerät mit einer Steuereinrichtung zum Steuern eines Betriebsprozesses des Haushaltsgeräts, welche zum Durchführen eines derartigen Verfahrens ausgebildet ist.

Es ist in Haushalten üblich, mehrere Haushaltsgeräte gleichzeitig ohne Rücksicht auf die jeweils anderen Geräte sowie ohne Rücksicht auf den aktuellen Preis für elektrische Energie laufen zu lassen. Eine derartige Vorgehensweise hat im Wesentlichen zwei Nachteile: Einerseits kann eine maximal zulässige Leistungsaufnahme im Haushalt oder aber in einem größeren elektrischen Netzabschnitt überschritten werden bzw. können Lastspitzen erzeugt werden, die das elektrische Versorgungsnetz überlasten. Auf der anderen Seite kann der Betrieb eines Haushaltsgeräts relativ teuer sein, wenn das Haushaltsgerät zu einer Zeit mit ungünstigen Energiepreisen betrieben wird.

Eine Abhilfe schaffen hier so genannte intelligente Stromversorgungsnetze (smart grids). Solche intelligenten Stromnetze sorgen für eine gleichmäßige Lastverteilung in einem bestimmten elektrischen Netzabschnitt, sei es durch entsprechende Steuerbefehle an elektrische Geräte oder aber durch Übermittlung von Informationen über den zeitlichen Verlauf der Energiepreise. Die Energieversorger sind verpflichtet oder werden verpflichtet sein, transparente und flexible Tarife anzubieten. Ein Haushaltsgerät kann somit - beispielsweise über das Internet - Daten empfangen, die Informationen über den zeitlichen Verlauf der Preise für elektrische Energie (oder aber einer anderen Betriebsressource) beinhalten. Das Haushaltsgerät kann diese Informationen dahingehend nutzen, dass beispielsweise ein Betrieb des Haushaltsgeräts nur zu einem Zeitpunkt eingeleitet wird, zu welchem die Kosten für elektrische Energie am geringsten sind. Nicht nur kann durch eine solche intelligente Vorgehensweise das Stromversorgungsnetz zu bestimmten Tageszeiten entlastet werden, es können somit auch Kosten gespart werden.

Die vorliegende Erfindung geht im Wesentlichen vom Gegenstand gemäß Druckschrift US 2003/0178894 A1 bzw. US 7 110 832 B2 aus. Diese Dokumente beschreiben ein Verfahren zur Steuerung der Leistungsaufnahme eines elektrischen Haushaltsgeräts. Das Haushaltsgerät empfängt Daten mit Informationen über die zeitliche Verteilung der Kosten für elektrische Energie für ein nachkommendes Zeitintervall. Diese zeitliche Verteilung beinhaltet einerseits ein Zeitintervall mit geringen Kosten für die Energie sowie andererseits ein Zeitintervall mit hohen Kosten für die Energie. Der Betrieb des Haushaltsgeräts kann nur dann gestartet werden, wenn der momentane bzw. aktuelle Zeitpunkt innerhalb des Zeitintervalls mit geringen Kosten liegt. Außerdem wird die Zeitdauer dieses Zeitintervalls mit einer Zeitdauer des Betriebsprozesses des Haushaltsgeräts verglichen. Der Betrieb wird nur unter der Voraussetzung gestartet, dass die Zeitdauer des Betriebsprozesses kürzer als die Zeitdauer des genannten Zeitintervalls mit geringen Kosten ist.

Aus der Druckschrift DE 10 2005 055 648 A1 ist eine Waschmaschine bekannt, welche zur Aufbereitung von Warmwasser ausgebildet ist. Die Waschmaschine beinhaltet einen Wasserspeicher, welcher mit einer externen Wasserführung verbunden ist. Eine Steuereinheit steuert einen Aufbereitungsprozess von Warmwasser und kommuniziert mit einer externen Einheit, welche Informationen über die Kosten für elektrische Energie bereitstellt. Der Aufbereitungsprozess von Warmwasser wird abhängig von den bereitgestellten Informationen aktiviert, nämlich dann, wenn die Energiekosten im Tagesverlauf am niedrigsten sind.

Aus der Druckschrift EP 0 727 668 A1 ist ein Gerätesystem bekannt, das eine Vielzahl von miteinander kommunizierenden Haushaltsgeräten beinhaltet. Die Haushaltsgeräte kommunizieren miteinander über einen Kommunikationsbus. Eine durch die Haushaltsgeräte aufgenommene Summenleistung wird durch ein Messgerät gemessen.

Das Messgerät sendet Daten über den Kommunikationsbus, die Informationen über die jeweils aktuelle Summenleistung umfassen. Jedes Haushaltsgerät kann selbige Daten an dem Kommunikationsbus abgreifen und eine eigene Leistungsaufnahme unter Berücksichtigung der in den Daten enthaltenen Informationen einstellen. Die Haushaltsgeräte vergleichen die jeweils augenblickliche Summenleistung mit einem vorbestimmten Grenzwert. Überschreitet die Summenleistung den vorbestimmten Grenzwert, so reduzieren die Haushaltsgeräte ihre eigene Leistungsaufnahme.

Das Dokument DE 10 2005 020 519 B4 beschreibt ein Haushaltsgerät mit einer Steuereinrichtung, welche die Betriebsprozesse des Haushaltsgeräts steuert. Die Betriebsprozesse beinhalten Prozessschritte, welche gegenüber anderen Prozessschritten einen hohen Energiebedarf aufweisen. Es ist eine Kommunikationsschnittstelle bereitgestellt, welche zum Datenaustausch zwischen der Steuereinrichtung und einem Energieversorger dient. Die Steuereinrichtung kann über die Kommunikationsschnittstelle an den Energieversorger eine Zeitinformation über den Energiebedarf des Betriebsprozesses senden. Der Energieversorger kann seinerseits wiederum eine Quittungsinformation an die Steuereinrichtung übermitteln; die Quittungsinformation enthält den genauen Zeitraum, in welchem das Haushaltsgerät den Prozessschritt mit dem hohen Energiebedarf durchführen darf. Es ist auch vorgesehen, dass die Bedienperson den frühesten Startzeitpunkt, die gewünschte Dauer sowie den spätesten Endzeitpunkt des Betriebsprozesses vorgeben kann.

Wie das Dokument US 7 110 832 B2 beschreibt auch die Druckschrift WO 2010/003952 A1 ein Haushaltsgerät, bei welchem eine Steuereinrichtung - Informationen über einen zeitlichen Kostenverlauf der elektrischen Energie empfängt und das Haushaltsgerät in Abhängigkeit von dem zeitlichen Kostenverlauf der elektrischen Energie steuert. Soweit wie möglich wird ein Betriebsprozess des Haushaltsgeräts während einer Zeitdauer mit günstigen Energiepreisen durchgeführt. Der Betriebsprozess wird jedoch auf jeden Fall vor einem spätesten Zeitpunkt abgeschlossen, der durch den Benutzer des Haushaltsgeräts vorgegeben werden kann.

Also sind aus dem Stand der Technik Haushaltsgeräte (siehe dazu auch die US 2007/0276547 A1) bekannt, bei denen Informationen über einen zeitlichen Preisverlauf der elektrischen Energie für ein nachfolgendes Zeitintervall empfangen und bei der Bestimmung des optimalen Startzeitpunkts für den Start des Betriebsprozesses berücksichtigt werden. Ein solcher Kostenverlauf der elektrischen Energie ist in der Regel ein rechteckförmiger bzw. stufenförmiger Verlauf. Es gibt nämlich Zeitintervalle mit geringen Kosten für elektrische Energie, wie auch solche Zeitintervalle, in denen der Preis für die elektrische Energie relativ hoch ist. An dem Stand der Technik ist als nachteilig der Umstand anzusehen, dass alleine auf der Grundlage des zeitlichen Preisverlaufs der elektrischen Energie der optimale Startzeitpunkt für den Start des Betriebsprozesses nur unzureichend bestimmt werden kann. Zwar gibt der zeitliche Preisverlauf der Energie eine eindeutige Information über den jeweils augenblicklichen sowie den zukünftigen Preis der Energie, jedoch sagt dieser zeitliche Preisverlauf der Energie noch nichts über die tatsächlich anfallenden Kosten des Betriebsprozesses aus. Wird der Startzeitpunkt so bestimmt, dass er in einem Zeitintervall mit geringen Kosten für die Energie liegt, so ist noch längst nicht gewährleistet, dass die Kosten des gesamten Betriebsprozesses minimal sind.

Darüber hinaus beschreibt die US 2006/0276938 A1 ein Optimierungsverfahren, bei dem an einem Ort mehrere Energiequellen zur Verfügung stehen und jeweils die Energiequelle mit den derzeit geringsten Grenzkosten ausgewählt wird.

In dem Artikel "Near optimal demand-side energy management under real-time demandresponse pricing" von Jin Xiao et al., IEEE International Conference on Network and Service Management (CNSM) 2010, Piscataway, NJ, USA, Seiten 527-532, wird wiederum ein Algorithmus zur Glättung des Energiebedarfs dargestellt, der eine Minimierung der maximalen Energiekosten in jeder Zeitspanne anstrebt.

Es ist Aufgabe der Erfindung, einen Weg aufzuzeigen, wie bei einem Verfahren der eingangs genannten Gattung der Startzeitpunkt für den Start des Betriebsprozesses besonders zuverlässig bestimmt werden kann, so dass die anfallenden Kosten möglichst minimal sind.

Diese Aufgabe wird erfindungsgemäß durch ein Verfahren mit den Merkmalen gemäß Patentanspruch 1, wie auch durch ein Haushaltsgerät mit den Merkmalen gemäß Patentanspruch 12 gelöst. Vorteilhafte Ausführungen der Erfindung sind Gegenstand der abhängigen Patentansprüche und der Beschreibung.

Ein erfindungsgemäßes Verfahren dient zum Bestimmen eines Startzeitpunkts für den Start eines Betriebsprozesses eines Haushaltsgeräts mithilfe einer Steuereinrichtung. Zu zumindest einer Betriebsressource - zum Beispiel zu elektrischer Energie - empfängt die Steuereinrichtung Daten mit Informationen über einen zeitlichen Preisverlauf der Betriebsressource für ein nachkommendes Zeitintervall - diese Daten kann die Steuereinrichtung beispielsweise von einem Anbieter der Betriebsressource empfangen, gegebenenfalls auch unter Vermittlung eines so genannten intelligenten Stromzählers. Der zeitliche Preisverlauf der Betriebsressource wird durch die Steuereinrichtung in einen zeitlichen Kostenverlauf des Betriebsprozesses für die Betriebsressource - als Funktion des Startzeitpunkts - zumindest unter Berücksichtigung einer Zeitdauer des Betriebsprozesses umgewandelt. Die Steuereinrichtung bestimmt dann den Startzeitpunkt anhand des zeitlichen Kostenverlaufs des Betriebsprozesses.

Der erfindungsgemäße Effekt wird somit dadurch erzielt, dass aus dem zeitlichen Preisverlauf der Betriebsressource ein zeitlicher Kostenverlauf des - insbesondere gesamten - Betriebsprozesses für die Betriebsressource als Funktion des Startzeitpunkts gewonnen wird, nämlich unter Berücksichtigung der Zeitdauer des Betriebsprozesses. Anders als im Stand der Technik wird somit der Startzeitpunkt nicht oder nicht alleine anhand des empfangenen zeitlichen Preisverlaufs der Betriebsressource bestimmt, sondern anhand eines daraus gewonnenen tatsächlichen Kostenverlaufs des Betriebsprozesses, welcher nun als Funktion des zu bestimmenden Startzeitpunkts vorliegt. Mit anderen Worten werden die empfangenen Preisinformationen zur weiteren Verarbeitung in Kosten für ein Hausgeräte-Programm umgewandelt. Für die Bestimmung des optimalen Startzeitpunktes steht somit in der Steuereinrichtung für das nachkommende - also zukünftige - Zeitintervall ein zeitlicher Verlauf (beispielsweise in Form einer Tabelle) zur Verfügung, welcher eine Abhängigkeit der Kosten des gesamten Betriebsprozesses für die Betriebsressource von dem zu bestimmenden Startzeitpunkt beschreibt. Eine solche Vorgehensweise hat den Vorteil, dass die Bestimmung des Startzeitpunkts deutlich präziser als alleine anhand des zeitlichen Preisverlaufs der Betriebsressource erfolgen kann. Es kann beispielsweise eine bestimmte Grenze für die Kosten des Betriebsprozesses vorgegeben werden, und der Startzeitpunkt kann derart bestimmt werden, dass die Kosten des gesamten Betriebsprozesses für die Betriebsressource die vorgegebene Grenze nicht überschreiten. Also ermöglicht das erfindungsgemäße Verfahren die Bestimmung des Startzeitpunkts derart, dass die tatsächlichen Kosten des gesamten Betriebsprozesses minimal sind.

Unter einem Haushaltsgerät wird vorliegend ein Gerät verstanden, welches zur Haushaltsführung eingesetzt wird. Dies kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrierkombination oder ein Klimagerät. Dies kann aber auch ein Haushaltskleingerät sein, wie beispielsweise ein Kaffeevollautomat oder eine Küchenmaschine. Insbesondere wird unter dem Haushaltsgerät ein programmgesteuertes Gerät verstanden, dessen Betriebsprozesse gemäß abgelegten Betriebsprogrammen durchgeführt werden.

Unter dem Preisverlauf der Betriebsressource wird vorliegend eine zeitliche Verteilung der Kosten für die Betriebsressource als Funktion der Zeit verstanden, beispielsweise im Tagesverlauf. Solche Informationen können von einem Anbieter der Betriebsressource gesendet werden, nämlich zum Beispiel unter Vermittlung eines so genannten intelligenten Stromzählers. Es ist prinzipiell unerheblich, ob die Preise absolut oder relativ vorliegen. Die empfangenen Informationen beschreiben also ein Tarifprofil für einen bestimmten, nachfolgenden Zeitraum - beispielsweise die nächsten 24 Stunden.

In einer Ausführungsform ist die Betriebsressource beispielsweise elektrische Energie und/oder Wasser und/oder Gas. Dann werden Daten mit Informationen über den zeitlichen Preisverlauf von elektrischer Energie und/oder von Wasser und/oder von Gas als Betriebsressource empfangen, und dieser Verlauf wird dann in den zeitlichen Kostenverlauf des Betriebsprozesses für die elektrische Energie und/oder für das Wasser und/oder für das Gas unter Berücksichtigung der Zeitdauer des Betriebsprozesses umgewandelt. Bei der Betriebsressource Wasser kann auch zwischen warmen und kaltem Wasser unterschieden werden. Beispielsweise wird das Haushaltsgerät über eine Warmwasserleitung mit warmem Wasser versorgt, welches mittels Gas oder elektrischer Energie noch weiter erwärmt werden muss. Es sind auch verschiedene Kombinationen von unterschiedlichen Betriebsressourcen möglich. Es kann somit elektrische Energie und/oder Wasser und/oder Gas gespart werden; andererseits kann somit auch das elektrische Stromversorgungsnetz und/oder ein Wasserversorgungsnetz und/oder ein Gasversorgungsnetz entlastet werden.

Bezüglich der Bestimmung des Zeitpunkts für den Start des Betriebs sind prinzipiell zwei Alternativen vorgesehen: Zum einen kann es eine interne Steuereinrichtung des Haushaltsgeräts sein, welche den Startzeitpunkt für den Start des Betriebsprozesses festlegt. Ein Vorteil dieser geräteinternen Steuereinrichtung besteht darin, dass keine weiteren Komponenten außer dem Haushaltsgerät benötigt werden, sodass das Haushaltsgerät ohne ein zusätzliches separates Steuergerät auskommt. Auf der anderen Seite kann der Startzeitpunkt auch durch ein vom Haushaltsgerät separates, externes Steuersignal bestimmt werden, welches das Haushaltsgerät empfängt. Dieses Steuersignal kann durch ein Energie Management System, ein Home Area Network System oder ein webbasierendes System erzeugt bzw. übermittelt werden. Es kann insbesondere ein vom Haushaltsgerät separates Steuergerät (als Steuereinrichtung) vorgesehen sein, durch das das Steuersignal an das Haushaltsgerät übertragen wird, wie beispielsweise ein intelligenter Stromzähler. Ein solches Steuergerät kann dann sowohl mit dem Haushaltsgerät als auch mit einem Anbieter der Betriebsressource kommunizieren, nämlich mit einer externen Recheneinrichtung des Anbieters. Einerseits kann somit das Steuergerät Daten mit Informationen über den zeitlichen Preisverlauf empfangen; andererseits kann es auch diesen Preisverlauf in den zeitlichen Kostenverlauf des Betriebsprozesses für die Betriebsressource umwandeln. Ein separates Steuergerät hat den Vorteil, dass ein solches Steuergerät auch den Betrieb von weiteren Haushaltsgeräten steuern kann; es können nämlich eine Vielzahl von Haushaltsgeräten mit einem solchen Steuergerät kommunizieren, welches dann als eine zentrale Steuereinrichtung dient.

Somit wird der Zeitpunkt für den Start des Betriebsprozesses des Haushaltsgeräts festgelegt. Auf der einen Seite kann vorgesehen sein, dass dieser Startzeitpunkt als Vorschlag mithilfe einer Ausgabeeinrichtung ausgegeben wird. Dann kann die Bedienperson entscheiden, ob sie diesen Vorschlag annehmen möchte oder nicht. Die Bedienperson kann hier einen anderen, für sie günstigeren Zeitpunkt bestimmen und das Haushaltsgerät auch zu diesem anderen Zeitpunkt in Betrieb nehmen. Auf der anderen Seite kann vorgesehen sein, dass zu dem durch die Steuereinrichtung bestimmten Startzeitpunkt der Betriebsprozess benutzerunabhängig automatisch eingeleitet wird, etwa durch die interne Steuereinrichtung des Haushaltsgeräts oder aber aufgrund von Steuerbefehlen eines externen Steuergeräts. Dies kann beispielsweise so aussehen, dass die Bedienperson ein bestimmtes Betriebsprogramm für den Betriebsprozess des Haushaltsgeräts auswählt und die geräteinterne Steuereinrichtung dann den günstigsten Startzeitpunkt für den Start des Betriebsprozesses bestimmt und den Betrieb des Haushaltsgeräts zu diesem Startzeitpunkt automatisch einleitet, ohne dass die Bedienperson den Betrieb selbst explizit starten muss.

Wie bereits ausgeführt, wird der zeitliche Preisverlauf der Betriebsressource in den zeitlichen Kostenverlauf des Betriebsprozesses unter Berücksichtigung der Zeitdauer des Betriebsprozesses umgewandelt - diese Zeitdauer ist spezifisch für das ausgewählte Betriebsprogramm. Zur Ermittlung des zeitlichen Kostenverlaufs des Betriebsprozesses wird erfindungsgemäß der zeitliche Preisverlauf der Betriebsressource für eine Vielzahl von möglichen Startzeitpunkten jeweils über die Zeitdauer des Betriebsprozesses integriert. Auf diese Weise kann der zeitliche Kostenverlauf des Betriebsprozesses besonders zuverlässig und auf einfach zu implementierende Weise ermittelt werden.

Um den Rechenaufwand auf ein Minimum zu reduzieren, kann der zeitliche Kostenverlauf ausgehend von dem für die Vielzahl von möglichen Startzeitpunkten ermittelten Kostenverlauf interpoliert werden. Somit braucht der Preisverlauf der Betriebsressource lediglich für eine begrenzte Anzahl von möglichen Startzeitpunkten integriert werden, und für andere Startzeitpunkte kann der zeitliche Kostenverlauf des Betriebsprozesses interpoliert werden. Dies reduziert den Rechenaufwand auf ein Minimum.

Es erweist sich als besonders vorteilhaft, wenn bei der Ermittlung des zeitlichen Kostenverlaufs des Betriebsprozesses auch ein zeitliches Verbrauchsprofil berücksichtigt wird, welches einen Verbrauch der Betriebsressource durch das Haushaltsgerät während des Betriebsprozesses beschreibt. Diese Ausführungsform macht sich die Tatsache zunutze, dass die Haushaltsgeräte in der Regel keinen konstanten Energieverbrauch über der Zeit aufweisen, sondern der Energieverbrauch über der Zeit variiert. Der Energieverbrauch kann beispielsweise von der Anzahl der in Betrieb genommenen elektrischen Verbraucher abhängig sein. Diese Ausführungsform hat somit den Vorteil, dass der zeitliche Kostenverlauf des Betriebsprozesses sehr präzise und realitätsgetreu ermittelt werden kann. Das Verbrauchsprofil beschreibt einen Verbrauch der Betriebsressource durch das Haushaltsgerät als Funktion der Zeit während des Betriebsprozesses bei Anwendung eines bestimmten Betriebsprogramms. Es kann im Haushaltsgerät bekanntlich eine Vielzahl von Betriebsprogrammen bereitgestellt bzw. abgelegt sein; zu jedem Betriebsprogramm kann ein solches Verbrauchsprofil abgelegt sein, welches den Verbrauch der Betriebsressource durch das Haushaltsgerät während des Betriebs bei Anwendung des jeweiligen Betriebsprogramms beschreibt. Ein solches Verbrauchsprofil kann auch nach einer jeden Auswahl des Betriebsprögramms situationsabhängig jeweils neu berechnet werden, sodass auch gegebenenfalls ausgewählte Zusatzfunktionen für das Betriebsprogramm berücksichtigt werden. Wird der Startzeitpunkt für den Start des Betriebsprozesses durch ein vom Haushaltsgerät separates Steuergerät - etwa einen intelligenten Stromzähler - bestimmt, so kann dieses Steuergerät Daten betreffend das Verbrauchsprofil auch über das Internet oder aber direkt vom Haushaltsgerät empfangen.

Folgende Ausführungsform erweist sich als besonders vorteilhaft: Für die Kosten des Betriebsprozesses für die Betriebsressource wird eine maximal mögliche Preisabweichung (nach oben) von einem im Kostenverlauf liegenden minimalen Preis vorgegeben. Dann wird der Startzeitpunkt derart bestimmt, dass der Preis des Betriebsprozesses für die Betriebsressource innerhalb der vorgegebenen Preisabweichung liegt. Bei dieser Ausführungsform wird also zunächst ein minimaler Preis - also ein globales Minimum - im Kostenverlauf durch die Steuereinrichtung aufgefunden, und zu dem minimalen Preis wird dann die vorgegebene maximal mögliche Preisabweichung addiert. Das Ergebnis dieser Addition stellt die maximal möglichen bzw. maximal zulässigen Kosten des Betriebsprozesses für die Betriebsressource dar. Das Vorgeben der maximal möglichen Preisabweichung hat den Vorteil, dass einerseits die Kosten des Betriebsprozesses relativ gering gehalten werden können und andererseits auch der Betriebsprozess selbst schnell abgeschlossen werden kann. Durch das Vorgeben der maximal möglichen Preisabweichung wird quasi ein Kompromiss zwischen den Kosten einerseits und dem Zeitpunkt des Abschlusses des Betriebsprozesses andererseits gefunden.

Es kann beispielsweise eine Bedienperson des Haushaltsgeräts sein, welche die maximal mögliche Preisabweichung festlegt. In diesem Fall empfängt die Steuereinrichtung eine Eingabe, welche die Bedienperson an einer Bedieneinrichtung des Haushaltsgeräts vornimmt und durch welche die maximal mögliche Preisabweichung vorgegeben wird. Die Bedienperson kann somit selbst entscheiden, wie hoch die Kosten des Betriebsprozesses für die Betriebsressource sein können.

Es kann vorgesehen sein, dass in dem zeitlichen Kostenverlauf des Betriebsprozesses ein minimaler Preis einerseits und ein maximaler Preis des Betriebsprozesses andererseits ermittelt werden. Dann kann ein maximal zulässiger Preis für den Betriebsprozess anhand der folgenden Gleichung bestimmt werden:

$$AC = MIC + DC \cdot (MAC - MIC),$$

wobei AC den maximal zulässigen Preis des Betriebsprozesses für die Betriebsressource, MIC den minimalen Preis innerhalb des zeitlichen Kostenverlaufs, MAC den maximalen Preis innerhalb des zeitlichen Kostenverlaufs und DC die vorgegebene maximal mögliche Preisabweichung in Prozent bezeichnen. Bei dieser Ausführungsform wird der Startzeitpunkt für den Start des Betriebsprozesses derart bestimmt, dass der Preis des Betriebsprozesses für die Betriebsressource den maximal zulässigen Preis nicht überschreitet. Auf diese Weise können Kosten für die Betriebsressource gespart werden. Andererseits kann die oben angegebene Formel relativ ohne viel Aufwand implementiert werden.

Es kann auch ein spätester Zeitpunkt für den Abschluss des Betriebsprozesses vorgegeben werden. Dann kann der Startzeitpunkt derart unter Berücksichtigung der Zeitdauer des Betriebsprozesses bestimmt werden, dass der Betriebsprozess vor dem spätesten Zeitpunkt abgeschlossen wird. Auch hier kann vorgesehen sein, dass der späteste Zeitpunkt durch die Bedienperson festgelegt wird, wobei die Bedienperson hier entweder einen festen Zeitpunkt ("fertig um ...") oder aber eine Verzögerung ("fertig in ...") angeben kann.

Wird der späteste Zeitpunkt, an welchem der Betriebsprozess abgeschlossen werden soll, durch die Bedienperson festgelegt, so kann es wünschenswert sein, wenn der tatsächliche Zeitpunkt des Abschlusses des Betriebsprozesses so nahe wie möglich an dem vorgegebenen spätesten Zeitpunkt liegt. Aus diesem Grund ist in einer Ausführungsform vorgesehen, dass als Startzeitpunkt für den Start des Betriebsprozesses ein dem vorgegebenen spätesten Zeitpunkt am nächsten liegender Zeitpunkt bestimmt wird, bei welchem die Kosten des Betriebsprozesses für die Betriebsressource innerhalb der vorgegebenen Preisabweichung liegen. Die Bedienperson kann somit den Zeitpunkt für den Abschluss des Betriebsprozesses bestimmen, indem sie den spätesten Zeitpunkt festlegt, und der Betriebsprozess wird so nahe wie möglich an dem spätesten Zeitpunkt abgeschlossen. Einerseits wird somit sichergestellt, dass die Kosten des Betriebsprozesses innerhalb der vorgegebenen Preisabweichung liegen; andererseits wird auch der Betriebsprozess so nahe wie möglich an dem festgelegten spätesten Zeitpunkt abgeschlossen. Die Benutzerfreundlichkeit des Haushaltsgeräts wird somit mit den geringen Kosten für den Betriebsprozess kombiniert.

Um weiterhin Kosten zu sparen, kann für den genannten, dem spätesten Zeitpunkt am nächsten liegenden Zeitpunkt eine maximal mögliche Zeitabweichung vorgegeben werden - diese maximal mögliche Zeitabweichung kann ebenfalls durch die Bedienperson festgelegt werden. Innerhalb dieser maximal möglichen Zeitabweichung kann dann ein minimaler Preis des Betriebsprozesses - also quasi ein lokales Minimum - ermittelt werden, und der Startzeitpunkt kann derart bestimmt werden, dass der Preis des Betriebsprozesses für die Betriebsressource gleich dem minimalen Preis ist. Somit können die Kosten des Betriebsprozesses auf ein Minimum reduziert werden.

Es kann auch vorkommen, dass der festgelegte späteste Zeitpunkt, zu welchem der Betriebsprozess abgeschlossen werden soll, später liegt als das nachkommende Zeitintervall, für welches die Daten mit Informationen über den zeitlichen Preisverlauf der Betriebsressource vorliegen. Ist dies der Fall, so wird bevorzugt ausschließlich dieses nachkommende Zeitintervall, für welches die Daten vorliegen, bei der Bestimmung des Startzeitpunkts für den Start des Betriebsprozesses berücksichtigt. Werden dann nach der Bestimmung des Startzeitpunkts neue Daten mit Informationen über den zeitlichen Preisverlauf der Betriebsressource bis zu dem festgelegten spätesten Zeitpunkt empfangen, so kann der zuvor bereits bestimmte Startzeitpunkt unter Berücksichtigung der neuen Daten korrigiert werden. Dies kann beispielsweise so aussehen, dass nach dem Empfang von neuen Daten ein zuvor festgelegter Startzeitpunkt zeitlich verschoben wird, etwa in Richtung zu dem festgelegten spätesten Zeitpunkt. Auf diese Weise werden stets die neuesten Daten berücksichtigt, und zwar selbst dann, wenn der Startzeitpunkt bereits festgelegt wurde. Der Startzeitpunkt kann somit jeweils bedarfsgerecht und situationsangepasst bestimmt werden.

Die Erfindung betrifft außerdem ein Haushaltsgerät mit einer Steuereinrichtung zum Steuern eines Betriebsprozesses des Haushaltsgeräts. Die Steuereinrichtung kann zu zumindest einer Betriebsressource des Haushaltsgeräts Daten mit Informationen über einen zeitlichen Preisverlauf der Betriebsressource für ein nachkommendes Zeitintervall empfangen. Die Steuereinrichtung kann unter Berücksichtigung einer Zeitdauer des Betriebsprozesses den Preisverlauf der Betriebsressource in einen zeitlichen Kostenverlauf des Betriebsprozesses für die Betriebsressource - als Funktion des Startzeitpunkts - umwandeln. Die Steuereinrichtung bestimmt dann den Startzeitpunkt für den Start des Betriebsprozesses anhand des zeitlichen Kostenverlaufs des Betriebsprozesses.

Die mit Bezug auf das erfindungsgemäße Verfahren vorgestellten bevorzugten Ausführungsformen und deren Vorteile gelten entsprechend für das erfindungsgemäße Haushaltsgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:

Fig. 1    einen zeitlichen Preisverlauf der elektrischen Energie als Betriebsressource, wie er durch eine Steuereinrichtung eines Haushaltsgeräts von einem Energiebetreiber empfangen wird, nämlich für ein nachkommendes Zeitintervall;

Fig. 2    den zeitlichen Preisverlauf gemäß Fig. 1, wobei die Umrechnung des Preisverlaufs in einen Kostenverlauf eines Betriebsprozesses für die elektrische Energie näher erläutert wird;

Fig. 3    den zeitlichen Kostenverlauf des Betriebsprozesses als Funktion eines Startzeitpunkts für den Start des Betriebsprozesses;

Fig. 4    den Kostenverlauf gemäß Fig. 3, wobei erste Schritte einer Auswertung des Kostenverlaufs näher erläutert werden; und

Fig. 5    den Kostenverlauf gemäß Fig. 3, wobei weitere Schritte der Auswertung und die Bestimmung des bestmöglichen Startzeitpunkts des Betriebsprozesses näher erläutert werden.

Gegeben ist ein Haushaltsgerät, etwa eine Waschmaschine, ein Wäschetrockner, ein Waschtrockner oder eine Geschirrspülmaschine. Das Haushaltsgerät beinhaltet eine Steuereinrichtung, welche zum Steuern von Betriebsprozessen des Haushaltsgeräts ausgebildet ist, nämlich gemäß abgelegten Betriebsprogrammen. Die Steuereinrichtung kann einen digitalen Signalprozessor, einen Mikrocontroller und einen Speicher beinhalten. Das Haushaltsgerät ist also ein programmgesteuertes Gerät. In der Steuereinrichtung sind nämlich eine Vielzahl von Betriebsprogrammen abgelegt; bei einer Waschmaschine sind dies beispielsweise folgende Programme: "Kochwäsche", "Buntwäsche" und dergleichen. Eine Bedienperson kann mithilfe einer Bedieneinrichtung des Haushaltsgeräts ein bestimmtes Betriebsprogramm auswählen, und die Steuereinrichtung führt dann den Betriebsprozess des Haushaltsgeräts gemäß dem ausgewählten Betriebsprogramm aus. Die Zeitdauer des Betriebsprozesses hängt dabei von dem ausgewählten Betriebsprogramm ab. Daten, die die jeweilige Zeitdauer für die Vielzahl der abgelegten Betriebsprogramme angeben, können ebenfalls in der Steuereinrichtung abgelegt sein. Diese Zeitdauer kann auch gegebenenfalls "online", also quasi in Echtzeit berechnet bzw. angepasst werden, nämlich insbesondere dann, wenn zusätzliche Funktionen - etwa "Vorwäsche" - ausgewählt werden.

Die Bedienperson wählt also ein bestimmtes Betriebsprogramm aus. Die Steuereinrichtung bestimmt nun automatisch den Startzeitpunkt des Betriebsprozesses, also den Zeitpunkt, zu welchem der Betriebsprozess eingeleitet wird. Vorzugsweise erfolgt dies automatisch, sodass der Betriebsprozess unabhängig von der Bedienperson zu dem festgelegten Startzeitpunkt eingeleitet wird. Die Bestimmung des Startzeitpunkts nach einem Verfahren gemäß einer Ausführungsform der Erfindung wird nachfolgend näher beschrieben:

Es gelten folgende Größen als gegeben:

- CT - aktuelle Zeit - diese kann von einer in das Haushaltsgerät integrierten Echtzeituhr geliefert werden;
- PD - die Zeitdauer des Betriebsprozesses gemäß dem ausgewählten Betriebsprogramm (also Programmdauer des Haushaltsgeräts);
- LET - spätester Zeitpunkt, an welchem das Programm bzw. der Betriebsprozess abgeschlossen sein muss - diesen Parameter kann die Bedienperson beispielsweise mithilfe der Bedieneinrichtung festlegen;
- TTI - ein Preisverlauf der elektrischen Energie bis zum spätesten Zeitpunkt LET - Daten mit Informationen über diesen Preisverlauf werden durch die Steuereinrichtung beispielsweise von einem Energieanbieter empfangen, etwa unter Vermittlung des so genannten intelligenten Stromzählers; dieser zeitliche Preisverlauf liegt also für ein nachkommendes Zeitintervall vor und kann zum Beispiel in Form einer Tabelle bereitgestellt sein;
- EST - frühestmöglicher Startzeitpunkt des Betriebsprozesses - dieser Parameter kann optional durch die Bedienperson angegeben werden;

- DC - eine maximal mögliche Preisabweichung nach oben ausgehend von einem minimalen Preis innerhalb eines Kostenverlaufs des Betriebsprozesses - diese maximal mögliche Preisabweichung wird durch die Bedienperson in Prozent der Differenz zwischen maximalen und minimalen Kosten des Betriebsprozesses angegeben; sie kann optional angegeben werden;
- DT - eine maximal mögliche Zeitabweichung nach früher - diese kann ebenfalls optional durch die Bedienperson festgelegt werden.

Wird der frühestmögliche Startzeitpunkt des Betriebsprozesses nicht angegeben, so wird der aktuelle Zeitpunkt CT als EST definiert: EST = CT. Ist/sind auch die maximale Preisabweichung DC und/oder die maximal mögliche Zeitabweichung DT nicht angegeben, dann werden diese zu null gesetzt.

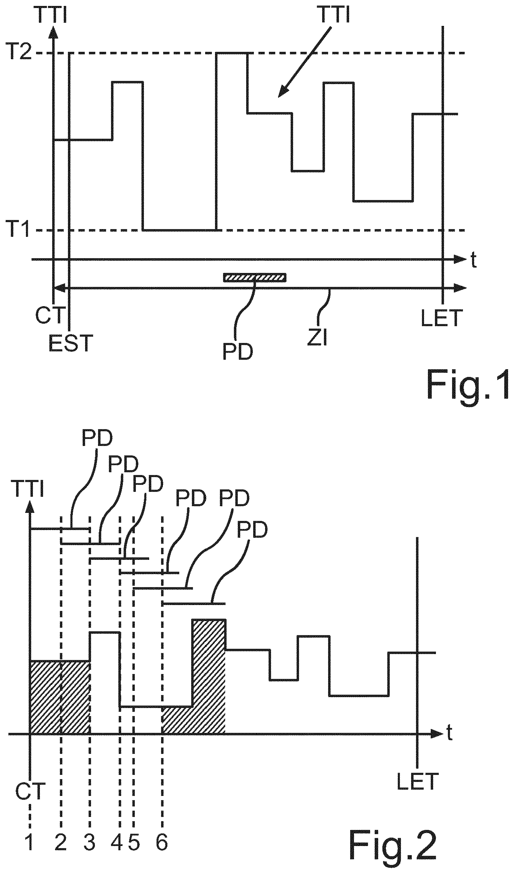

Wie bereits ausgeführt, empfängt die Steuereinrichtung Daten von dem Energieanbieter, welche Informationen über den zeitlichen Preisverlauf TTI der elektrischen Energie für ein nachkommendes Zeitintervall ZI beinhalten. In Fig. 1 ist der Preisverlauf TTI der elektrischen Energie als Funktion der Zeit t dargestellt. Wie aus Fig. 1 hervorgeht, weist der Preisverlauf TTI die Stufenform bzw. die Rechteckform auf und schwankt zwischen einem minimalen Wert T1 und einem maximalen Wert T2. Der frühestmögliche Startzeitpunkt des Betriebsprozesses beträgt EST, während der späteste Zeitpunkt, an welchem der Betriebsprozess abgeschlossen sein muss, als LET bezeichnet ist. Zur Veranschaulichung ist die Zeitdauer des Betriebsprozesses in Fig. 1 mit PD bezeichnet und in Form eines Balkens entlang der Zeitachse dargestellt.

Beinhalten die empfangenen Daten keine Informationen über den Preis der elektrischen Energie bis zum spätesten Zeitpunkt LET, wird bei der Bestimmung des Startzeitpunkts des Betriebsprozesses ausschließlich der vorhandene Preisverlauf TTI berücksichtigt. Falls vor dem Start des Betriebsprozesses neue Daten mit Informationen über den Preis der elektrischen Energie bis zum Zeitpunkt LET empfangen werden, können diese Daten gegebenenfalls zu einer Anpassung des vorab bestimmten Startzeitpunkts führen.

In der Steuereinrichtung steht also ein zeitlicher Preisverlauf TTI der elektrischen Energie zur Verfügung (etwa in Form einer Tabelle), wie er in Fig. 1 dargestellt ist. Aus diesem Preisverlauf TTI wird nun ein zeitlicher Kostenverlauf des Betriebsprozesses für die elektrische Energie ermittelt. Dabei wird der Preisverlauf TTI für eine Vielzahl von möglichen Startzeitpunkten über die Zeitdauer PD des Betriebsprozesses integriert. Näherungsweise wird dabei die Leistungsaufnahme des Haushaltsgerätes über die Zeitdauer PD des Betriebsprozesses als konstant angenommen. Bezug nehmend auf Fig. 2 wird die Bestimmung der Kosten des Betriebsprozesses für sechs unterschiedliche Startzeitpunkte 1 bis 6 näher erläutert. Zunächst wird - von dem aktuellen Zeitpunkt CT als ersten möglichen Startzeitpunkt angefangen - über die Länge von PD das Integral des Preisverlaufs TTI gebildet; dabei wird die Fläche unter den Preisverlauf berechnet. Das Ergebnis dieses Integrals ist ein erster Wert des Kostenverlaufs des Betriebsprozesses - dieser Wert kann in einer Tabelle abgespeichert werden. Dann wird die Zeitdauer PD auf der Zeitachse t weiter nach rechts verschoben, bis der Programmstartzeitpunkt und/oder der Programmendzeitpunkt auf eine Preisänderung im Preisverlauf TTI trifft/treffen. In Fig. 2 ist dargestellt, wie der Kostenverlauf für sechs unterschiedliche Startzeitpunkte 1 bis 6 jeweils durch eine Integration des Preisverlaufs TTI ermittelt wird. Dabei ist in Fig. 2 die Fläche unterhalb des Preisverlaufs TTI für den ersten möglichen Startzeitpunkt 1 sowie für den letzten Startzeitpunkt 6 dargestellt. Die Verschiebung der Zeitdauer PD nach rechts und somit die Berechnung von Integralen endet, wenn der späteste Zeitpunkt LET oder aber das Ende des Preisverlaufs TTI erreicht wird.

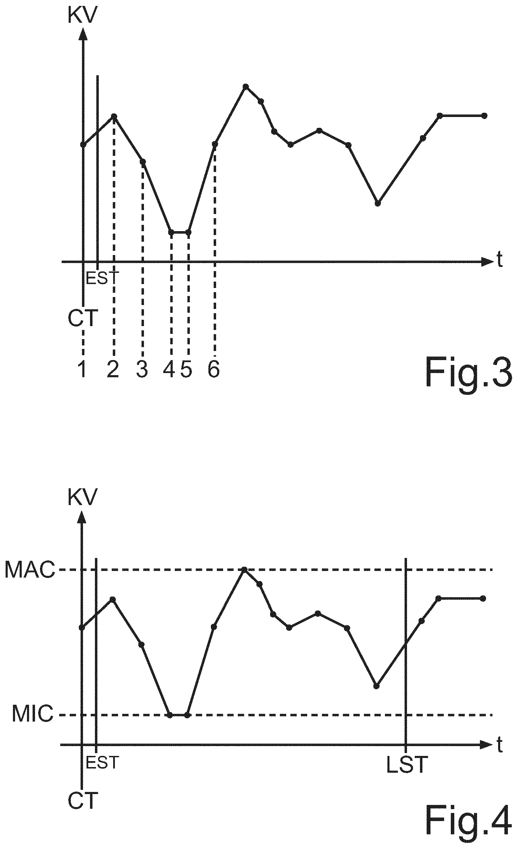

All die integrierten Werte werden dann in einer Kostentabelle gesammelt; diese Werte bilden dann den zeitlichen Kostenverlauf des Betriebsprozesses. Ein beispielhafter zeitlicher Kostenverlauf KV ist in Fig. 3 dargestellt. Dieser Kostenverlauf KV ergibt sich für den in Fig. 1 bzw. Fig. 2 dargestellten Preisverlauf TTI der elektrischen Energie. Die Werte des Kostenverlaufs KV für die in Fig. 2 dargestellten Startzeitpunkte 1 bis 6 sind in Fig. 3 eindeutig zu erkennen. Zwischen diesen Werten kann der Kostenverlauf KV auch interpoliert werden, sodass weitere Werte des Kostenverlaufs KV ermittelt werden. In der Steuereinrichtung steht nun der zeitliche Kostenverlauf KV des Betriebsprozesses für die Bestimmung des Startzeitpunkts zur Verfügung. Ausgehend von dem in Fig. 3 dargestellten Kostenverlauf KV legt die Steuereinrichtung dann den optimalen Startzeitpunkt des Betriebsprozesses fest.

Bei der Bestimmung des zeitlichen Kostenverlaufs KV kann gegebenenfalls auch ein zeitliches Verbrauchsprofil berücksichtigt werden, welches den Verbrauch der elektrischen Energie durch das Haushaltsgerät während des Betriebsprozesses beschreibt. Der Kostenverlauf KV kann somit noch genauer ermittelt werden.

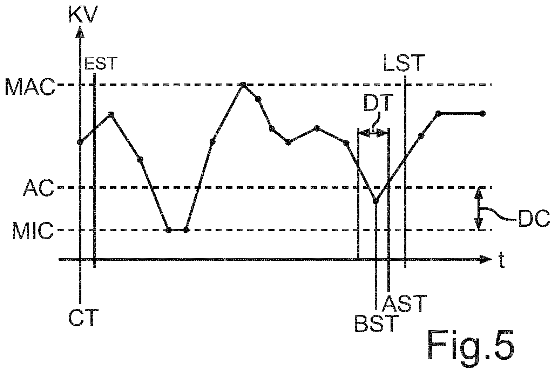

Die Bestimmung des Startzeitpunkts anhand des zeitlichen Kostenverlaufs KV wird nachfolgend mit Bezug auf die Fig. 4 und 5 näher beschrieben:

Als erstes wird ein letztmöglicher Programmstartzeitpunkt LST (siehe Fig. 4) ermittelt. Dazu wird von dem spätesten Zeitpunkt LET (siehe Fig. 1) die Zeitdauer PD des Betriebsprozesses subtrahiert. Der Zeitpunkt LST ist also der späteste Zeitpunkt, zu welchem der Betriebsprozess eingeleitet werden soll. Für die Bestimmung des Startzeitpunkts steht nun das Zeitintervall zwischen den Zeitpunkten EST und LST zur Verfügung.

In dem Zeitintervall zwischen EST und LST werden dann ein minimaler Preis MIC sowie ein maximaler Preis MAC des Kostenverlaufs KV ermittelt. In einem weiteren Schritt wird ein maximal zulässiger Preis AC, also die erlaubten Kosten für den Betriebsprozess, gemäß der folgenden Formel berechnet:

$$AC = MIC + DC \cdot (MAC - MIC),$$

wobei DC die oben bereits genannte maximal mögliche Preisabweichung als Prozentsatz bezeichnet.

Bezug nehmend auf Fig. 5 wird dann ein letzter erlaubter Startzeitpunkt AST ermittelt, also ein dem letztmöglichen Programmstartzeitpunkt LST am nächsten liegender Zeitpunkt innerhalb der zeitlichen Grenzen EST und LST, bei welchem die Kosten des Betriebsprozesses innerhalb der maximal möglichen Preisabweichung DC liegen, also die Grenze AC nicht überschreiten. Prinzipiell könnte nun der Zeitpunkt AST als Startzeitpunkt bestimmt werden. Jedoch kann dieser Startzeitpunkt weiterhin optimiert werden, indem die genannte maximal mögliche Zeitabweichung DT mit einbezogen wird, um einen bestmöglichen Startzeitpunkt BST zu ermitteln. Dazu wird innerhalb der maximal möglichen Zeitabweichung DT (ausgehend vom Zeitpunkt AST in Richtung nach früher) nach den geringsten Kosten, also prinzipiell nach einem lokalen Minimum des Kostenverlaufs KV, gesucht. Die Kosten des Betriebsprozesses sind innerhalb der Zeitabweichung DT zum Zeitpunkt BST minimal. Also wird der Betriebsprozess zum Startzeitpunkt BST eingeleitet.

**Bezugszeichenliste**

| | |
|---|---|
| 1, 2, 3, 4, 5, 6 | mögliche Startzeitpunkte, |
| AC | maximal zulässiger Preis, |
| AST | letzter erlaubter Startzeitpunkt, |
| BST | bestmöglicher Startzeitpunkt, |
| CT | aktuelle Zeit, |
| DC | maximal mögliche Preisabweichung nach oben, |
| DT | maximal mögliche Zeitabweichung nach früher, |
| EST | frühestmöglicher Startzeitpunkt des Betriebsprozesses, |
| KV | Kostenverlauf des Betriebsprozesses, |
| LET | spätester Zeitpunkt, an welchem das Programm bzw. der Betriebsprozess abgeschlossen sein muss, |
| LST | letztmöglicher Programmstartzeitpunkt, |
| MAC | maximaler Preis des Kostenverlaufs KV, |
| MIC | minimaler Preis des Kostenverlaufs KV, |
| PD | Zeitdauer des Betriebsprozesses, |
| TTI | Preisverlauf der elektrischen Energie, |
| T1 | minimaler Wert des Preisverlaufs TTI, |

| T2 | maximaler Wert des Preisverlaufs TTI, |
| ZI | nachkommendes Zeitintervall, |
| t | Zeit |

**Patentansprüche**

1. Verfahren zum Bestimmen eines Startzeitpunkts (BST) für den Start eines Betriebsprozesses eines Haushaltsgerätes mittels einer Steuereinrichtung, mit den Schritten:

   - zu zumindest einer Betriebsressource des Haushaltsgerätes Empfangen von Daten durch die Steuereinrichtung mit Informationen über einen zeitlichen Preisverlauf (TTI) der Betriebsressource für ein nachkommendes Zeitintervall (ZI),
   - Umwandeln des zeitlichen Preisverlaufs (TTI) der Betriebsressource durch die Steuereinrichtung in einen zeitlichen Kostenverlauf (KV) des Betriebsprozesses für die Betriebsressource unter Berücksichtigung einer Zeitdauer (PD) des Betriebsprozesses und
   - Bestimmen des Startzeitpunkts (BST) durch die Steuereinrichtung anhand des zeitlichen Kostenverlaufs (KV) des Betriebsprozesses,

   **dadurch gekennzeichnet, dass**

   - zur Ermittlung des zeitlichen Kostenverlaufs (KV) des Betriebsprozesses der zeitliche Preisverlauf (TTI) der Betriebsressource für eine Vielzahl von möglichen Startzeitpunkten (1 - 6) über die Zeitdauer (PD) des Betriebsprozesses integriert wird.

2. Verfahren nach Anspruch 1, **dadurch gekennzeichnet, dass** Daten mit Informationen über den zeitlichen Preisverlauf (TTI) von elektrischer Energie und/oder von Wasser und/oder von Gas als Betriebsressource empfangen werden.

3. Verfahren nach Anspruch 1 oder 2, **dadurch gekennzeichnet, dass** der zeitliche Kostenverlauf (KV) ausgehend von dem für die Vielzahl von möglichen Startzeitpunkten (1 - 6) ermittelten Kostenverlauf (KV) interpoliert wird.

4. Verfahren nach einem der vorhergehenden Ansprüche, **dadurch gekennzeichnet, dass** bei der Ermittlung des zeitlichen Kostenverlaufs (KV) des Betriebsprozesses auch ein zeitliches Verbrauchsprofil berücksichtigt wird, welches einen Verbrauch der Betriebsressource durch das Haushaltsgerät während des Betriebsprozesses beschreibt.

5. Verfahren nach einem der vorhergehenden Ansprüche, **dadurch gekennzeichnet, dass** für die Kosten des Betriebsprozesses für die Betriebsressource eine maximal mögliche Preisabweichung (DC) von einem im Kostenverlauf (KV) liegenden minimalen Preis (MIC) vorgegeben wird und der Startzeitpunkt (BST) derart bestimmt wird, dass der Preis des Betriebsprozesses für die Betriebsressource innerhalb der vorgegebenen Preisabweichung (DC) liegt.

6. Verfahren nach Anspruch 5, **dadurch gekennzeichnet, dass** die Steuereinrichtung eine Eingabe empfängt, die eine Bedienperson an einer Bedieneinrichtung des Haushaltsgerätes vornimmt und durch welche die maximal mögliche Preisabweichung (DC) vorgegeben wird.

7. Verfahren nach Anspruch 5 oder 6, **dadurch gekennzeichnet, dass** in dem zeitlichen Kostenverlauf (KV) des Betriebsprozesses ein minimaler Preis (MIC) und ein maximaler Preis (MAC) des Betriebsprozesses ermittelt werden und ein maximal zulässiger Preis (AC) für den Betriebsprozess anhand der folgenden Gleichung bestimmt wird:

$$AC = MIC + DC \cdot (MAC - MIC),$$

   wobei AC den maximal zulässigen Preis des Betriebsprozesses, MIC den minimalen Preis innerhalb des zeitlichen Kostenverlaufs (KV), MAC den maximalen Preis innerhalb des zeitlichen Kostenverlaufs (KV) und DC die vorgegebene maximal mögliche Preisabweichung als Prozentsatz bezeichnen, und wobei der Startzeitpunkt (BST) derart bestimmt wird, dass der Preis des Betriebsprozesses für die Betriebsressource den maximal zulässigen Preis (AC) nicht überschreitet.

8. Verfahren nach einem der vorhergehenden Ansprüche, **dadurch gekennzeichnet, dass** ein spätester Zeitpunkt (LET) für den Abschluss des Betriebsprozesses vorgegeben wird und der Startzeitpunkt (BST) derart unter Berücksichtigung der Zeitdauer (PD) des Betriebsprozesses bestimmt wird, dass der Betriebsprozess vor dem spätesten Zeitpunkt (LET) abgeschlossen wird.

9. Verfahren nach einem der Ansprüche 5 bis 7 und Anspruch 8, **dadurch gekennzeichnet, dass** als Startzeitpunkt (BST) ein dem spätesten Zeitpunkt (LET) am nächsten liegender Zeitpunkt (AST) bestimmt wird, bei welchem die Kosten des Betriebsprozesses für die Betriebsressource innerhalb der vorgegebenen Preisabweichung (DC) liegen.

10. Verfahren nach Anspruch 9, **dadurch gekennzeichnet, dass** für den dem spätesten Zeitpunkt (LET) am nächsten liegenden Zeitpunkt (AST) eine maximal mögliche Zeitabweichung (DT) vorgegeben wird, innerhalb welcher ein minimaler Preis des Betriebsprozesses ermittelt wird, wobei der Startzeitpunkt (BST) derart bestimmt wird, dass der Preis des Betriebsprozesses für die Betriebsressource gleich dem minimalen Preis ist.

11. Verfahren nach einem der Ansprüche 8 bis 10, **gekennzeichnet durch**

    - falls der späteste Zeitpunkt (LET) später als das nachkommende Zeitintervall (ZI) liegt, für welches die Daten mit Informationen über den zeitlichen Preisverlauf (TTI) der Betriebsressource vorliegen, Berücksichtigen ausschließlich dieses nachkommenden Zeitintervalls (ZI) bei der Bestimmung des Startzeitpunkts (BST) und
    - falls nach der Bestimmung des Startzeitpunkts (BST) neue Daten mit Informationen über den zeitlichen Preisverlauf (TTI) bis zu dem spätesten Zeitpunkt (LET) empfangen werden, Korrigieren des Startzeitpunkts (BST) unter Berücksichtigung der neuen Daten.

12. Haushaltsgerät mit einer Steuereinrichtung zum Steuern eines Betriebsprozesses des Haushaltsgerätes, die dazu ausgelegt ist,

    - zu zumindest einer Betriebsressource des Haushaltsgerätes Daten mit Informationen über einen zeitlichen Preisverlauf (TTI) der Betriebsressource für ein nachkommendes Zeitintervall (ZI) zu empfangen,
    - unter Berücksichtigung einer Zeitdauer (PD) des Betriebsprozesses den Preisverlauf (TTI) der Betriebsressource in einen zeitlichen Kostenverlauf (KV) des Betriebsprozesses für die Betriebsressource umzuwandeln und
    - einen Startzeitpunkt (BST) für den Start des Betriebsprozesses anhand des zeitlichen Kostenverlaufs (KV) des Betriebsprozesses zu bestimmen,

    **dadurch gekennzeichnet, dass**

    - die Steuereinrichtung dazu ausgelegt ist, zur Ermittlung des zeitlichen Kostenverlaufs (KV) des Betriebsprozesses den zeitlichen Preisverlauf (TTI) der Betriebsressource für eine Vielzahl von möglichen Startzeitpunkten (1 - 6) über die Zeitdauer (PD) des Betriebsprozesses zu integrieren.

**Claims**

1. Method for determining a start time (BST) for starting an operating process of a household appliance by means of a control device, with the steps:

    - Receiving of data relating to at least one operating resource of the household appliance by the control device, which data comprises information regarding a price profile (TTI) over time of the operating resource for a following time interval (ZI),
    - Conversion of the price profile (TTI) over time of the operating resource by the control device into a cost profile (KV) over time of the operating process for the operating resource, taking into consideration a duration (PD) of the operating process and
    - Determination of the start time (BST) by the control device on the basis of the cost profile (KV) over time of the operating process,

    **characterised in that**

    - in order to establish the cost profile (KV) over time of the operating process, the price profile (TTI) over time of the operating resource is integrated for a multiplicity of possible start times (1 - 6) over the duration (PD) of the operating process.

2. Method according to claim 1, **characterised in that** data comprising information regarding the price profile (TTI) over time of electrical energy and/or of water and/or of gas as an operating resource is received.

3. Method according to claim 1 or 2, **characterised in that** the cost profile (KV) over time is interpolated, starting from the cost profile (KV) established for the multiplicity of possible start times (1 - 6).

4. Method according to one of the preceding claims, **characterised in that** when establishing the cost profile (KV) over time of the operating process, a consumption profile over time is also taken into consideration, which describes a consumption of the operating resource by the household appliance during the operating process.

5. Method according to one of the preceding claims, **characterised in that** a maximum possible price variance (DC) from a minimum price (MIC) lying in the cost profile (KV) is predefined for the cost of the operating process for the operating resource and the start time (BST) is determined such that the price of the operating process for the operating resource lies within the predefined price variance (DC).

**6.** Method according to claim 5, **characterised in that** the control device receives an input which an operator carries out at an operating device of the household appliance, and by way of which the maximum possible price variance (DC) is predefined.

**7.** Method according to claim 5 or 6, **characterised in that** in the cost profile (KV) over time of the operating process a minimum price (MIC) and a maximum price (MAC) of the operating process are established and a maximum permitted price (AC) for the operating process is determined on the basis of the following equation:

$$MC = MIC + DC \cdot (MAC - MIC),$$

wherein AC denotes the maximum permitted price of the operating process, MIC the minimum price within the cost profile (KV) over time, MAC the maximum price within the cost profile (KV) over time and DC the predefined maximum possible price variance as a percentage, and wherein the start time (BST) is determined such that the price of the operating process for the operating resource does not exceed the maximum permitted price (AC).

**8.** Method according to one of the preceding claims, **characterised in that** a latest time (LET) for completing the operating process is predefined and the start time (BST) is determined, taking into consideration the duration (PD) of the operating process, such that the operating process is completed prior to the latest time (LET).

**9.** Method according to one of the claims 5 to 7 and claim 8, **characterised in that** a time (AST) closest to the latest time (LET) is determined as the start time (BST), in which the costs of the operating process for the operating resource lie within the predefined price variance (DC).

**10.** Method according to claim 9, **characterised in that** for the time (AST) closest to the latest time (LET), a maximum possible time variance (DT) is predefined, within which a minimum price of the operating process is established, wherein the start time (BST) is determined such that the price of the operating process for the operating resource is equal to the minimum price.

**11.** Method according to one of claims 8 to 10, **characterised by**,

- if the latest time (LET) is later than the following time interval (ZI), for which the data comprising information regarding the price profile (TTI) over time of the operating resource is present, taking into consideration exclusively said following time interval (ZI) when determining the start time (BST) and

- if, after determining the start time (BST), new data comprising information regarding the price profile (TTI) over time up to the latest time (LET) is received, correcting the start time (BST) while taking into consideration the new data.

**12.** Household appliance with a control device for controlling an operating process of the household appliance, which is designed

- to receive data relating to at least one operating resource of the household appliance comprising information regarding a price profile (TTI) over time of the operating resource for a following time interval (ZI),
- to convert the price profile (TTI) of the operating resource into a cost profile (KV) over time of the operating process for the operating resource, taking into consideration a duration (PD) of the operating process, and
- to determine a start time (BST) for starting the operating process on the basis of the cost profile (KV) over time of the operating process,

**characterised in that**

- the control device is designed to integrate the price profile (TTI) over time of the operating resource for a multiplicity of possible start times (1 - 6) over the duration (PD) of the operating process, in order to establish the cost profile (KV) over time of the operating process.

**Revendications**

**1.** Procédé de détermination d'un instant de démarrage (BST) pour le démarrage d'un cycle de service d'un appareil ménager au moyen d'un dispositif de commande, comprenant les étapes consistant à :

- pour au moins une ressource de service de l'appareil ménager, recevoir des données grâce au dispositif de commande, comportant des informations sur une courbe de prix temporelle (TTI) de la ressource de service pour un intervalle de temps (ZI) à venir,
- convertir la courbe de prix temporelle (TTI) de la ressource de service grâce au dispositif de commande en une courbe de coût temporelle (KV) du cycle de service pour la ressource de service avec prise en compte d'une durée (PD) du cycle de service, et
- déterminer l'instant de démarrage (BST) grâce au dispositif de commande et à l'aide de la courbe de coût temporelle (KV) du cycle de service,

**caractérisé en ce que**

- la courbe de prix temporelle (TTI) de la ressource de service est intégrée pour une pluralité d'instants de démarrage (1 à 6) possibles sur la durée (PD) du cycle de service afin de déterminer la courbe de coût temporelle (KV) du cycle de service.

2. Procédé selon la revendication 1, **caractérisé en ce que** des données comportant des informations sur la courbe de prix temporelle (TTI) de l'énergie électrique et/ou de l'eau et/ou du gaz sont réceptionnées en tant que ressources de service.

3. Procédé selon la revendication 1 ou 2, **caractérisé en ce que** la courbe de coût temporelle (KV) est interpolée à partir de la courbe de coût (KV) déterminée pour la pluralité d'instants de démarrage (1 à 6) possibles.

4. Procédé selon l'une quelconque des revendications précédentes, **caractérisé en ce que**, lors de la détermination de la courbe de coût temporelle (KV) du cycle de service, un profil de consommation temporelle qui décrit une consommation de la ressource de service par l'appareil ménager pendant le cycle de service est également pris en compte.

5. Procédé selon l'une quelconque des revendications précédentes, **caractérisé en ce qu'**un écart de prix maximal possible (DC) à un prix minimal (MIC) situé sur la courbe de coût (KV) est prédéfini pour les coûts du cycle de service pour la ressource de service, et l'instant de démarrage (BST) est déterminé de sorte que le prix du cycle de service pour la ressource de service se situe à l'intérieur de l'écart de prix (DC) prédéfini.

6. Procédé selon la revendication 5, **caractérisé en ce que** le dispositif de commande reçoit une entrée effectuée par un utilisateur au niveau d'un dispositif utilisateur de l'appareil ménager et grâce à laquelle l'écart de prix maximal possible (DC) est prédéfini.

7. Procédé selon la revendication 5 ou 6, **caractérisé en ce qu'**un prix minimal (MIC) et un prix maximal (MAC) du cycle de service sont identifiés dans la courbe de coût temporelle (KV) du cycle de service et un prix maximal admissible (AC) pour le cycle de service est déterminé à l'aide de l'équation ci-dessous :

$$AC = MIC + DC \cdot (MAC - MIC),$$

dans lequel AC désigne le prix maximum admissible du cycle de service, MIC désigne le prix minimal sur la courbe de coût temporelle (KV), MAC désigne le prix maximal sur la courbe de coût temporelle (KV) et DC désigne l'écart de prix maximal possible prédéfini sous forme de pourcentage, et dans lequel l'instant de démarrage (BST) est déterminé de sorte que le prix du cycle de service pour la ressource de service ne dépasse pas le prix maximal admissible (AC).

8. Procédé selon l'une quelconque des revendications précédentes, **caractérisé en ce qu'**un instant le plus tardif (LET) pour l'arrêt du cycle de service est prédéfini et l'instant de démarrage (BST) est déterminé en prenant en compte la durée (PD) du cycle de service de sorte que le cycle de service est interrompu avant l'instant le plus tardif (LET).

9. Procédé selon l'une quelconque des revendications 5 à 7 et la revendication 8, **caractérisé en ce qu'**un instant (AST), situé juste après l'instant le plus tardif (LET) et pour lequel les coûts du cycle de service pour la ressource de service se situent à l'intérieur de l'écart de prix (DC) prédéfini, est déterminé comme étant l'instant de démarrage (BST).

10. Procédé selon la revendication 9, **caractérisé en ce qu'**un écart de temps maximal possible (DT), à l'intérieur duquel un prix minimal du cycle de service est déterminé, est prédéfini pour l'instant (AST) situé juste après l'instant le plus tardif (LET), l'instant de démarrage (BST) étant déterminé de sorte que le prix du cycle de service pour la ressource de service est identique au prix minimal.

11. Procédé selon l'une quelconque des revendications 8 à 10, **caractérisé par** les étapes consistant à

- dans le cas où l'instant le plus tardif (LET) se situe après l'intervalle de temps (ZI) à venir pour lequel existent les données comportant des informations sur la courbe de prix temporelle (TTI) de la ressource de service, prendre en compte exclusivement ledit intervalle de temps (ZI) à venir pour la détermination de l'instant de démarrage (BST) et
- dans le cas où de nouvelles données comportant des informations sur la courbe de prix temporelle (TTI) jusqu'à l'instant le plus tardif (LET) sont reçues après la détermination de l'instant de démarrage (BST), corriger l'instant de démarrage (BST) avec prise en compte des nouvelles données.

**12.** Appareil ménager comportant un dispositif de commande destiné à commander un cycle de service de l'appareil ménager, qui est conçu pour

- recevoir des données comportant des informations sur une courbe de prix temporelle (TTI) de la ressource de service pour un intervalle de temps (ZI) à venir pour au moins une ressource de service de l'appareil ménager,
- en prenant en compte une durée (PD) du cycle de service, convertir la courbe de prix (TTI) de la ressource de service en une courbe de coût temporelle (KV) du cycle de service pour la ressource de service et
- déterminer un instant de démarrage (BST) pour le démarrage du cycle de service à l'aide de la courbe de coût temporelle (KV) du cycle de service,

**caractérisé en ce que**

- le dispositif de commande est équipé pour intégrer la courbe de prix temporelle (TTI) de la ressource de service pour une pluralité d'instants de démarrage (1 à 6) possibles sur la durée (PD) du cycle de service afin de déterminer la courbe de coût temporelle (KV) du cycle de service.

Fig.1

Fig.2

Fig.3

Fig.4

Fig.5

**EP 2 678 917 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20030178894 A1
- US 7110832 B2
- DE 102005055648 A1
- EP 0727668 A1
- DE 102005020519 B4
- WO 2010003952 A1
- US 20070276547 A1
- US 20060276938 A1

### In der Beschreibung aufgeführte Nicht-Patentliteratur

- **JIN XIAO et al.** Near optimal demand-side energy management under real-time demandresponse pricing. *IEEE International Conference on Network and Service Management (CNSM),* 2010, 527-532